# EUROPÄISCHE PATENTSCHRIFT

(11) **EP 1 844 513 B1**
(45) Veröffentlichungstag und Bekanntmachung des Hinweises auf die Patenterteilung: **25.08.2010**
(21) Anmeldenummer: 06705786.9
(22) Anmeldetag: 14.01.2006
(51) Int. Cl.: H01M 8/02

(54) **INTERKONNEKTOR FÜR HOCHTEMPERATURBRENNSTOFFZELLEN**
INTERCONNECTOR FOR HIGH-TEMPERATURE FUEL CELLS
DISPOSITIF D'INTERCONNEXION POUR PILES A COMBUSTIBLE A HAUTE TEMPERATURE

(30) Priorität: 04.02.2005 DE 102005005116
(43) Veröffentlichungstag der Anmeldung: 17.10.2007
(73) Patentinhaber: Forschungszentrum Jülich GmbH, 52425 Jülich (DE)
(72) Erfinder: RINGEL, Helmut, 52382 Niederzier (DE)
(86) Internationale Anmeldenummer: PCT/DE2006/000047
(87) Internationale Veröffentlichungsnummer: WO 2006/081790

(56) Entgegenhaltungen:
- DE-A1- 10 050 010
- DE-A1- 10 306 647
- DE-A1- 10 306 649
- DE-A1- 19 547 699
- US-A- 5 733 682
- US-A1- 2003 194 592
- US-A1- 2004 050 462

## Beschreibung

Die Erfindung bezieht sich auf einen Interkonnektor für Hochtemperaturbrennstoffzellen.
Eine Brennstoffzelle weist eine Kathode, einen Elektrolyten sowie eine Anode auf. Der Kathode wird ein Oxidationsmittel, z. B. Luft, und der Anode wird ein Brennstoff, z. B. Wasserstoff, zugeführt.

Verschiedene Brennstoffzellentypen sind bekannt, beispielsweise die SOFC-Brennstoffzelle aus der Druckschrift DE 44 30 958 Cl sowie die PEM-Brennstoffzelle aus der Druckschrift DE 195 31 852 Cl.
Die SOFC-Brennstoffzelle wird auch Hochtemperaturbrennstoffzelle genannt, da ihre Betriebstemperatur bis zu 1000 °C betragen kann. An der Kathode einer Hochtemperaturbrennstoffzelle bilden sich in Anwesenheit des Oxidationsmittels Sauerstoffionen. Die Sauerstoffionen diffundieren durch den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.
Mehrere Brennstoffzellen werden in der Regel zur Erzielung großer elektrischer Leistungen durch verbindende Elemente, auch Interkonnektoren genannt, elektrisch und mechanisch miteinander verbunden. Mittels Interkonnektoren entstehen übereinander gestapelte, elektrisch in Serie geschaltete Brennstoffzellen. Diese Anordnung wird Brennstoffzellenstapel genannt. Die Brennstoffzellenstapel bestehen aus den Interkonnektoren und den Elektroden-Elektrolyt-Einheiten.
Interkonnektoren besitzen neben den elektrischen und mechanischen Eigenschaften regelmäßig auch Gasverteilerstrukturen. Dies wird durch Stege und Nuten realisiert (DE 44 10 711 C1). Gasverteilerstrukturen bewirken, dass die Betriebsmittel gleichmäßig in den Elektrodenräumen (Räume in denen sich die Elektroden befinden) verteilt werden.

Nachteilig können bei Brennstoffzellen und Brennstoffzellenstapeln folgende Probleme auftreten:
Metallische Interkonnektoren mit hohem Aluminiumgehalt bilden Al₂O₃-Deckschichten aus, die nachteilig wie ein elektrischer Isolator wirken.
Bei zyklischer Temperaturbelastung treten allgemein Wärmespannungen, verbunden mit Relativbewegungen der Einzelkomponenten zueinander, auf; diese resultieren aus dem unterschiedlichen Ausdehnungsverhalten bzw. den unterschiedlichen Ausdehnungskoeffizienten der verwendeten Materialien im Betrieb.

Diesbezüglich besteht im Stand der Technik noch keine ausreichende Kompatibilität zwischen den vergleichsweise hohen Ausdehnungskoeffizienten z. B. des metallischen Interkonnektors und den derzeit bekannten Elektrodenmaterialien, deren Ausdehnungskoeffizienten vergleichsweise gering sind. Wärmespannungen können einerseits zwischen Elektroden und Interkonnektoren auftreten. Diese können Zerstörungen innerhalb der Brennstoffzelle zur Folge haben. Dies betrifft andererseits aber auch die in Brennstoffzellen häufig eingesetzten Glaslote, die die Dichtigkeit der Brennstoffzellen gewährleisten sollen. Die nach dem Stand der Technik bekannten Interkonnektoren werden aus Metall gefertigt, wodurch eine gute elektrische Leitfähigkeit gewährleistet wird. Ein Nachteil der metallischen Interkonnektoren besteht jedoch darin, dass diese korrosionsanfällig sind und die Lebensdauer der Brennstoffzelle dadurch verkürzt wird. Insbesondere die Verwendung von ferritischem Chromstahl (z. B. Crofer 22, eine Stahllegierung mit 22% Chrom) stellt für die Kathode der Brennstoffzelle ein Problem dar. Dieses Material bildet bei hohen Temperaturen eine Chromoxidschutzschicht aus, die ausreichend leitfähig ist. Aus dieser Schutzschicht dampfen allerdings unter Betriebsbedingungen stetig Chromanteile ab, die die aktiven Zentren der Kathode der Brennstoffzelle deaktivieren, die sogenannte Chromvergiftung. Dies bedeutet eine stetige Abnahme der Leistung der Brennstoffzelle. Aus DE 195 47 699 ist ein selektiv beschichteter Interkonnektor bekannt, der aus einer chromoxidbildenden Legierung besteht. Diese weist im Bereich der Gasleitflächen eine Schutzschicht auf, die Korrosionseffekte vermindert und ein elektrischer Isolator ist, z. B. eine dünne Al₂O₃-Schicht. Im Übrigen ist der Interkonnektor mit einer Mischoxidschicht an der Elektrodenkontaktfläche überzogen, die zu einer Erhöhung der Leitfähigkeit sowie zu einer Verringerung der Abdampfrate führt. Diese Mischoxidschicht wird z. B. durch Aufbringen einer dünnen Schicht aus einem Metall oder aus Metalloxiden erreicht, die bei Hochtemperatur-Einsatz mit Cr und/oder Cr₂O₃ an der Oxid/Gas-Grenzfläche ein Mischoxid (z. B. vom Spinelltyp) bildet. Als geeignete Metalle oder deren Oxide werden Fe, Ni oder Co vorgeschlagen, die die physikalischen Eigenschaften des Cr₂O₃ in gewünschter Weise modifizieren. Diese Schichten sind jedoch nur bedingt stabil und neigen dazu, abzuplatzen oder Risse zu bilden. Ein weiterer Nachteil besteht darin, dass das Herstellungsverfahren für diese dünnen Schichten aufwendig ist.

Aufgabe der Erfindung ist es daher, einen Interkonnektor für eine Hochtemperaturbrennstoffzelle bereit zu stellen, der oxidationsbeständig ist, eine gute Leitfähigkeit an den Grenzflächen zu den Elektroden besitzt und eine geringe Abdampfrate von flüchtigem Chromoxid/- hydroxid aufweist. Darüber hinaus soll die durch den Kontakt zwischen Glaslot und Metall bedingte Korrosion möglichst gering gehalten werden. Es ist weiterhin Aufgabe der Erfindung ein vereinfachtes Herstellungsverfahren für einen Interkonnektor mit den zuvor genannten Eigenschaften zu schaffen. Probleme, die auf Wärmespannungen beruhen, z. B. mangelnde Dichtigkeit, sollen ausgeschlossen werden.

Diese Aufgabe wird durch einen Interkonnektor für eine Hochtemperaturbrennstoffzelle nach Anspruch 1 gelöst. Sie ist gekennzeichnet durch einen Interkonnektor (1), der aus zwei Bauteilen (A,B) unterschiedlichen Materials besteht, wobei das Bauteil (A), welches mit den Elektroden (2,3) in Kontakt steht und für die elektrische Verbindung der Brennstoffzellen sorgt, aus einer chromoxidbildenden Hochtemperaturlegierung besteht und das Bauteil (B), welches die Brennstoffzellen mechanisch verbindet, aus einem korrosionsfesten, elektrisch nicht leitenden Hochtemperaturmaterial besteht, welches keine Chromanteile wie z.B. Chromoxid abdampft. Ein für Bauteil (B) geeignetes Material kann beispielsweise eine Eisen-Chrom-Aluminium-Legierung sein, die eine Aluminiumoxidschutzschicht bildet. Durch diese Schutzschicht wird eine Abdampfung von Chromanteilen verhindert. Diese Schutzschicht ist jedoch nicht elektrisch leitfähig. Aus diesem Grund besteht das elektrisch leitende Bauteil (A) beispielsweise aus einem ferritischen Chromstahl, der ein Chromoxidbildner ist. Da nunmehr ein großer Teil des Brennstoffzellenstapels aus einem Aluminiumoxidbildner oder anderen Materialien ohne Chromanteile besteht, wird die Chromvergiftung stark reduziert. Weiterhin wird die bisher durch den Kontakt zwischen dem chromoxidbildenden Stahl und den Glaslotfugen bedingte Korrosion verhindert, da das Glaslot nunmehr nur noch mit dem Material des Bauteils B in Kontakt steht, welches kein Chromoxid abdampft.

Um Wärmespannungen zwischen den unterschiedlichen Materialien möglichst gering zu halten, ist es vorteilhaft Materialien mit bei Betriebstemperatur der Hochtemperaturbrennstoffzelle ähnlichen thermischen Ausdehnungskoeffizienten zu wählen. So ist beispielsweise eine Kombination von Crofer 22 für Bauteil A mit Aluchrom für Bauteil B eine vorteilhafte Ausführung oder auch Stahl mit der Werkstoffnummer 1.4742 und Aluchrom.

In einer vorteilhaften Ausgestaltung der Vorrichtung besteht das Bauteil A aus einem gewalzten Profilblech. Dies führt zu einer vereinfachten Herstellung des Bauteils, da die sonst üblichen spanabhebenden Verfahren zur Herstellung der Gasverteilerstrukturen, die bei einem Interkonnektor anfallen, der aus einem Bauteil gefertigt wird, entfallen.

In einer weiteren vorteilhaften Ausgestaltung der Vorrichtung besteht Bauteil B aus einem Dünnblech. Eine solche Ausführung führt zu einer vereinfachten Herstellung des Bauteils. Bauteil B, welches den Rahmen für Bauteil A bildet, kann beispielsweise so hergestellt werden, dass aus einem Blech die für Bauteil A erforderliche Aussparung ausgestanzt wird.

Eine vorteilhafte Ausführung der Vorrichtung sieht vor, dass die Bauteile A und B mit einem Dünnblech mit einer Dicke von beispielsweise 0,05 bis 0,2mm verbunden werden, um Wärmespannungen zwischen den beiden Bauteilen A und B zu vermindern. Dazu kann ein Spalt von beispielsweise 2 bis 10 mm zwischen den Bauteilen A und B vorgegeben werden, der mit einem Dünnblech überdeckt wird und jeweils am Bauteil A und am Bauteil B mittels Schweißen oder Hochtemperaturlöten gasdicht verbunden wird.

Die Aufgabe wird weiterhin gelöst durch ein Verfahren zur Herstellung des erfindungsgemäßen Interkonnektors.

Im Folgenden wird die Erfindung unter anderem auch anhand der Beschreibung eines Ausführungsbeispiels und unter Bezugnahme auf die beigefügte Figur erläutert.

Es zeigt:

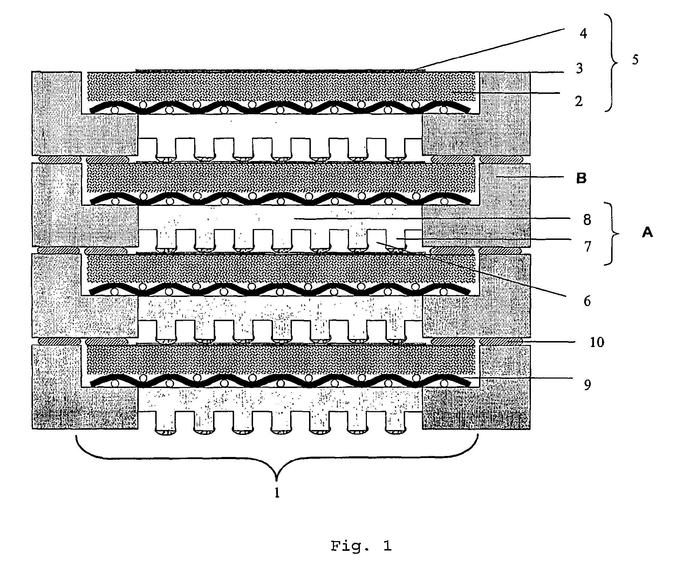

Fig. 1: schematischer Querschnitt durch einen Stapel von Brennstoffzellen, die durch die erfindungsgemäßen Interkonnektoren 1 miteinander verbunden werden.

Figur 1 zeigt schematisch einen Querschnitt durch vier Brennstoffzellen 5, jeweils bestehend aus Anode 2, Kathode 4 und Elektrolyt 3, die durch die erfindungsgemäßen Interkonnektoren 1 miteinander verbunden werden. Die Interkonnektoren 1 sind aus zwei Bauteilen A und B unterschiedlichen Materials gefertigt. Die Interkonnektoren enthalten Gaskanäle 6 und Stege 7. Das Bauteil A umfasst sowohl die Stege 7 als auch die Interkonnektorwand 8. Das Bauteil A, welches für die elektrische Leitfähigkeit innerhalb der Brennstoffzelle sorgt und jeweils mit der Kathode 4 und der Anode 2 der folgenden Brennstoffzelle in Kontakt steht, ist beispielsweise aus einer chromoxidbildenden Legierung oder aus einem anderen stromleitenden, verformbaren Material gefertigt. Dies können beispielsweise ein ferritischer Chromstahl wie Crofer 22 oder Edelmetalle wie Silber, Platin, Gold oder Palladium sein.
Das Bauteil B, welches die einzelnen Brennstoffzellen 5 mechanisch miteinander verbindet und den Rahmen für das Bauteil A bildet, ist aus einem elektrisch isolierenden Material wie beispielsweise Keramik oder einer ferritischen, aluminiumoxidbildenden Legierung gefertigt. Dies kann beispielsweise Aluchrom sein, das neben den etwa 20% Chrom noch 2 bis 5% Aluminium enthält. Dieser Aluminiumbestandteil bildet eine dichte Aluminiumoxidschutzschicht aus, so dass die Abdampfung von Chromanteilen vermieden wird. Zwischen Anode 2 und Interkonnektor 1 kann zum Auffangen von Relativbewegungen ein elastisches Mittel angeordnet sein. Dies kann beispielsweise ein elastisches Nickelnetz 9 sein. Zum gasdichten Abdichten der Fugen zwischen Brennstoffzelle 5 und Interkonnektoren 1 werden beispielsweise Glaskeramiken wie z. B. Glaslot 10 eingesetzt.

## Patentansprüche

1. Interkonnektor für Hochtemperaturbrennstoffzellen,
**dadurch gekennzeichnet,**
**dass** der Interkonnektor (1) aus zwei Bauteilen (A,B) unterschiedlichen Materials besteht, wobei das Bauteil (A), welches mit den Elektroden (2,4) in Kontakt steht und für die elektrische Verbindung der Brennstoffzelleneinheiten sorgt, aus einer chromoxidbildenden Hochtemperaturlegierung besteht und das Bauteil (B), welches die Brennstoffzelleneinheiten mechanisch verbindet, aus einem korrosionsfesten, elektrisch nicht leitenden Hochtemperaturmaterial, welches keine Chromanteile abdampft, besteht.

2. Interkonnektor nach Anspruch 1,
**dadurch gekennzeichnet,**
**dass** Bauteil (A) aus einem ferritischen Chromstahl besteht und das Bauteil (B) aus einer Eisen-Chrom-Aluminium-Legierung besteht.

3. Interkonnektor nach einem der Ansprüche 1 bis 2,
**dadurch gekennzeichnet,**
**dass** das Bauteil (A) aus Crofer 22 besteht und das Bauteil (B) aus Aluchrom.

4. Interkonnektor nach einem der Ansprüche 1 bis 3,
**dadurch gekennzeichnet,**
**dass** das Bauteil (A) ein gewalztes Profilblech ist.

5. Interkonnektor nach einem der Ansprüche 1 bis 4,
**dadurch gekennzeichnet,**
**dass** das Bauteil (B) aus einem Dünnblech besteht.

6. Interkonnektor nach einem der Ansprüche 1 bis 5,
**dadurch gekennzeichnet,**
**dass** die Bauteile (A) und (B) mit einem Dünnblech miteinander verbunden sind.

7. Verfahren zur Herstellung eines Interkonnektors für Hochtemperaturbrennstoffzellen,
**dadurch gekennzeichnet,**
**dass** der Interkonnektor (1) aus zwei Bauteilen (A, B) gefertigt wird, wobei das Bauteil (A), welches mit den Elektroden (2,3) in Kontakt steht und für die elektrische Verbindung der Brennstoffzellen sorgt, aus einer chromoxidbildenden Hochtemperaturlegierung gefertigt wird und das Bauteil (B), welches die Brennstoffzellen mechanisch verbindet, aus einem korrosionsfesten, nicht elektrisch leitenden Hochtemperaturmaterial, welches keine Chromanteile abdampft, gefertigt wird.

8. Verfahren nach Anspruch 7,
**dadurch gekennzeichnet,**
**dass** Bauteil (A) aus einem gewalzten Profilblech gefertigt wird.

9. Verfahren nach einem der Ansprüche 7 bis 8,
**dadurch gekennzeichnet,**
**dass** Bauteil (B) aus einem Dünnblech gefertigt wird.

## Claims

1. Interconnector for high-temperature fuel cells, **characterised in that** the interconnector (1) comprises two components (A, B) made of different materials, the component (A) which is in contact with the electrodes (2, 4) and which is responsible for connecting the fuel-cell units electrically being composed of a high-temperature alloy which forms chromium oxide and the component (B) which connects the fuel-cell units mechanically being composed of a corrosion-resistant, electrically non-conductive high-temperature material from which chromium constituents do not evaporate.

2. Interconnector according to claim 1, **characterised in that** component (A) is composed of a ferritic chromium steel and component (B) is composed of an iron-chromium-aluminium alloy.

3. Interconnector according to either of claims 1 and 2, **characterised in that** component (A) is composed of Crofer 22 and component (B) is composed of Aluchrom.

4. Interconnector according to one of claims 1 to 3, **characterised in that** component (A) is a rolled profiled sheet.

5. Interconnector according to one of claims 1 to 4, **characterised in that** component (B) comprises a thin-gauge sheet.

6. Interconnector according to one of claims 1 to 5, **characterised in that** components (A) and (B) are connected together by a thin-gauge sheet.

7. Method of producing an interconnector for high-temperature fuel cells, **characterised in that** the interconnector (1) is manufactured from two components (A, B), the component (A) which is in contact with the electrodes (2, 3) and which is responsible for connecting the fuel cells electrically being manufactured from a high-temperature alloy which forms chromium oxide and the component (B) which connects the fuel cells mechanically being manufactured from a corrosion-resistant, electrically non-conductive high-temperature material from which chromium constituents do not evaporate.

8. Method according to claim 7, **characterised in that** component (A) is manufactured from a rolled profiled sheet.

9. Method according to either of claims 7 and 8, **characterised in that** component (B) is manufactured from a thin-gauge sheet.

## Revendications

1. Interconnecteur pour piles à combustible à haute température,
**caractérisé**
**en ce que** ledit interconnecteur (1) est formé de deux composants (A, B) en matériaux différents, le composant (A), lequel est en contact avec les électrodes (2, 4) et assure la connexion électrique des unités de pile à combustible, étant réalisé dans un alliage résistant aux hautes températures formateur d'oxyde de chrome, et le composant (B), lequel raccorde mécaniquement les unités de pile à combustible, étant réalisé dans un matériau résistant aux hautes températures, résistant à la corrosion, non conducteur électrique, et qui ne déclenche pas l'évaporation de fractions de chrome.

2. Interconnecteur selon la revendication 1,
**caractérisé**
**en ce que** le composant (A) est réalisé dans un acier ferritique au chrome, et le composant (B) en un alliage fer-chrome-aluminium.

3. Interconnecteur selon l'une des revendications 1 à 2,
**caractérisé**
**en ce que** le composant (A) est réalisé en Crofer 22 et le composant (B) en Aluchrom.

4. Interconnecteur selon l'une des revendications 1 à 3,
**caractérisé**
**en ce que** le composant (A) est une tôle laminée profilée.

5. Interconnecteur selon l'une des revendications 1 à 4,
**caractérisé**
**en ce que** le composant (B) est en tôle mince.

6. Interconnecteur selon l'une des revendications 1 à 5,
**caractérisé**
**en ce que** les composants (A) et (B) sont raccordés l'un à l'autre par une tôle mince.

7. Procédé de fabrication d'un interconnecteur pour piles à combustible à haute température,
**caractérisé**
**en ce que** l'interconnecteur (1) est réalisé avec deux composants (A, B), le composant (A), lequel est en contact avec les électrodes (2, 3) et assure la connexion électrique des piles à combustible, étant réalisé dans un alliage résistant aux hautes températures formateur d'oxyde de chrome, et le composant (B), lequel raccorde mécaniquement les piles à combustible, étant réalisé dans un matériau résistant aux hautes températures, résistant à la corrosion, non conducteur électrique, et qui ne déclenche pas l'évaporation de fractions de chrome.

8. Procédé selon la revendication 7,
**caractérisé**
**en ce que** le composant (A) est réalisé dans une tôle laminée profilée.

9. Procédé selon l'une des revendications 7 à 8,
**caractérisé**
**en ce que** le composant (B) est réalisé dans une tôle mince.
